# EUROPEAN PATENT APPLICATION

(11) **EP 4 733 906 A1**
(43) Date of publication of application: **29.04.2026**
(21) Application number: 24825126.6
(22) Date of filing: 29.05.2024
(51) Int. Cl.: G06F 3/0481

(54) **MESSAGE DISPLAY METHOD, APPARATUS AND DEVICE, AND STORAGE MEDIUM**

(30) Priority: 20.06.2023 CN 202310736299
(71) Applicant: Beijing Zitiao Network Technology Co., Ltd., Beijing 100190 (CN)
(72) Inventor: SUN, Ping, Beijing 100028 (CN); ZHAO, Yongzhi, Beijing 100028 (CN)
(74) Representative: Marks & Clerk LLP
(86) International application number: PCT/CN2024/096153
(87) International publication number: WO 2024/260230

(57) **Abstract**

The present disclosure provides a method and apparatus for message display, a device and a storage medium. The method comprises: presenting media content on a media content presentation page; displaying, in response to a notification message from the functional module in a sidebar of the media content presentation page, the notification message at a preset position on the media content presentation page.

## Description

### CROSS-REFERENCE TO RELATED APPLICATION(S)

The application claims priority to Chinese Patent Application No. 202310736299.6, filed on June 20, 2023 and entitled "MESSAGE DISPLAY METHOD, APPARATUS AND DEVICE, AND STORAGE MEDIUM", which is incorporated herein by reference in its entirety.

### FIELD

The present disclosure relates to data processing field, and in particular, to a method and apparatus for message display, a device and a storage medium.

### BACKGROUND

With development of Internet technology, the message display function has been extensively applied in various applications.

The message display function involved in the current applications could not satisfy the user's needs. Therefore, it is an urgent technical problem to be solved as to how to diversify the message display function and enhance the user experience.

### SUMMARY

To solve the above technical problem, embodiments of the present disclosure provide a method for message display.

In a first aspect, the present disclosure provides a method for message display, comprising:
presenting media content on a media content presentation page; and
displaying, in response to a notification message from a functional module in a sidebar of the media content presentation page, the notification message at a preset position on the media content presentation page.

In an alternative implementation, displaying, in response to the notification message from the functional module in the sidebar of the media content presentation page, displaying the notification message at the preset position on the media content presentation page includes:
displaying, in response to the notification message from the functional module in the sidebar of the media content presentation page, a sidebar control corresponding to the sidebar on the media content presentation page; and
displaying the notification message on the sidebar control.

In an alternative implementation, the sidebar control further displays an entry identifier corresponding to the sidebar, and the method, after displaying the notification message on the sidebar control, further comprises:
displaying a user icon corresponding to the notification message in place of the entry identifier on the sidebar control; wherein the user icon is used for indicating a target user corresponding to the notification message.

In an alternative implementation, the sidebar control further displays a module identifier corresponding to the functional module, and the module identifier is used for indicating a functional module to which the notification message belongs.

In an alternative implementation, the method further comprises:
displaying, in response to a triggering operation on the sidebar control, the sidebar on the media content presentation page.

In an alternative implementation, the sidebar control further displays a close control, and the method further comprises:
hiding, in response to a triggering operation on the close control, the sidebar control and display content on the sidebar control; wherein the display content includes at least one of the notification message, the module identifier, the entry identifier and the user icon.

In an alternative implementation, after displaying, in response to the notification message from the functional module in the sidebar of the media content presentation page, the notification message at the preset position on the media content presentation page, the method further comprises:
timing a display duration of the notification message; and hiding, in response to a timed duration reaching a preset duration, the notification message.

In an alternative implementation, the method further comprises:
displaying a functional module addition control on the media content presentation page; and
in response to a triggering operation on the functional module addition control, displaying the sidebar on the media content presentation page and adding to the sidebar a functional module corresponding to the media content displayed on the media content presentation page.

In a second aspect, the present disclosure provides an apparatus for message display, comprising:
a presentation module configured to present media content on a media content presentation page; and
a first display module configured to display, in response to a notification message from a functional module in a sidebar of the media content presentation page, the notification message at a preset position on the media content presentation page.

In a third aspect, the present disclosure provides a computer-readable storage medium having instructions stored thereon, wherein the instructions, when running on a terminal device, cause the terminal device to implement the above method.

In a fourth aspect, the present disclosure provides a device for message display, comprising: a memory, a processor and computer programs stored on the memory and running on the processor, wherein the processor, when executing the computer programs, implements the above method.

In a fifth aspect, the present disclosure provides a computer program product comprising computer programs/instructions, the computer programs/instructions, when executed, implementing the above method.

In comparison to the prior art, the technical solution provided by the embodiments of the present disclosure at least has following advantages:

Embodiments of the present disclosure provide a method for message display, comprising: presenting media content on a media content presentation page; and displaying, in response to a notification message from a functional module in a sidebar of the media content presentation page, the notification message at a preset position on the media content presentation page.

### BRIEF DESCRIPTION OF THE DRAWINGS

The drawings here are incorporated into the description as a part of it, illustrate the embodiments compliant with the present disclosure, and are combined with the description to explain the principles of the present disclosure.

To more clearly explain the technical solution in the embodiments of the present disclosure or in the prior art, the drawings needed in the description of the embodiments or the prior art are to be introduced simply below. Apparently, those skilled in the art further may obtain other drawings from those illustrated without any exercises of inventive work.
Fig. 1 illustrates a flowchart of the method for message display provided by the embodiments of the present disclosure;
Fig. 2 illustrates a schematic diagram of a media content presentation page provided by the embodiments of the present disclosure;
Fig. 3 illustrates a schematic diagram of another media content presentation page provided by the embodiments of the present disclosure;
Fig. 4 illustrates a schematic diagram of a further media content presentation page provided by the embodiments of the present disclosure;
Fig. 5 illustrates a schematic diagram of a further media content presentation page provided by the embodiments of the present disclosure;
Fig. 6 illustrates a schematic diagram of another further media content presentation page provided by the embodiments of the present disclosure;
Fig. 7 illustrates a structural diagram of an apparatus for message display provided by the embodiments of the present disclosure;
Fig. 8 illustrates a structural diagram of a device for message display provided by the embodiments of the present disclosure.

### DETAILED DESCRIPTION OF EMBODIMENTS

For a clearer understanding of the above objectives, features and advantages of the present disclosure, the solution of the present disclosure is to be further described below. It is to be appreciated that embodiments of the present disclosure and features within the embodiments may be combined with one another without causing conflicts.

Many details are elaborated in the following description to provide a more comprehensive understanding of the present disclosure. However, the present disclosure may further be implemented in different ways than those described here. Apparently, the embodiments disclosed in the description is only a part of the embodiments of the present disclosure, rather than all of them.

To diversify the display functions with respect to the notification messages from the functional module, embodiments of the present disclosure provide a method for message display. First of all, media contents are presented on a media content presentation page. Then, when a notification message from the functional module in a sidebar of the media content presentation page is received, the notification message is displayed at a preset position on the media content presentation page. By displaying the notification message from the functional module in the sidebar at the preset position on the media content presentation page, embodiments of the present disclosure can promptly remind the user of the notification message from the functional module in the sidebar when the user browses media contents. Accordingly, the display function of the notification message is diversified and the user experience is enhanced.

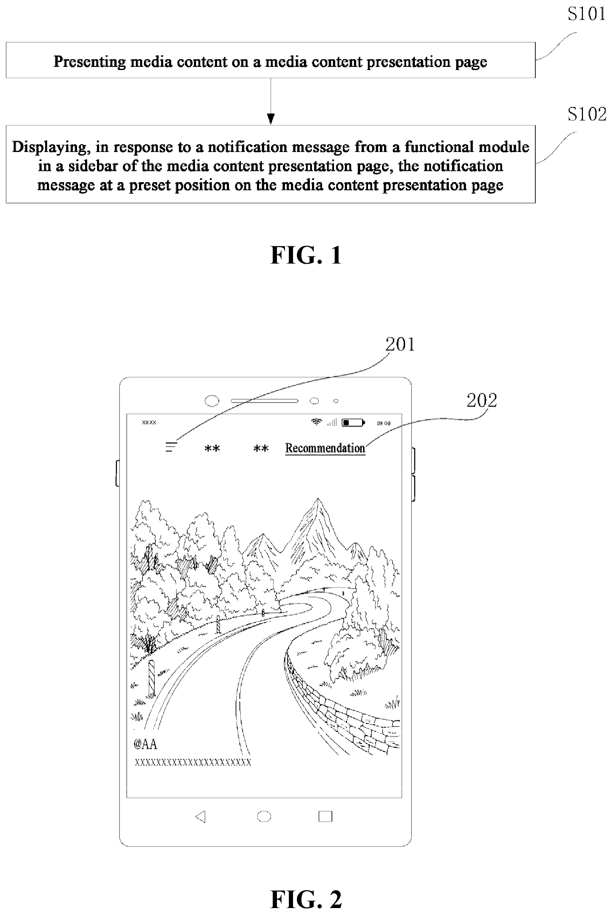

On this basis, embodiments of the present disclosure provide a method for message display. Fig. 1 illustrates a flowchart of the method for message display provided by the embodiments of the present disclosure. The method comprises:
S101: presenting media content on a media content presentation page.

The method for message display provided by the embodiments of the present disclosure may be applied to a client. For example, the client may include a client deployed in a smartphone and a client deployed in a tablet computer etc.

The media content presentation page may be a page for presenting media contents and specifically may include a video recommendation page and the like, wherein the media content presentation page is used for presenting media contents. In the embodiments of the present disclosure, the media contents presented on the media content presentation page may be of any types, e.g., video content, image/text content and the like.

Fig. 2 illustrates a schematic diagram of a media content presentation page provided by the embodiments of the present disclosure. The media content may be demonstrated as Fig. 2. Further, the media content presentation page may further display a tab label, e.g., "recommendation" label 202 for identifying the media content presentation page. There may be more than one tab labels and the page switch can be implemented by switching tab labels.

S102: in response to a notification message from a functional module in a sidebar of the media content presentation page, displaying the notification message at a preset position on the media content presentation page.

Sidebar refers to a page form that appears from side positions and is displayed at the side of a homepage. The sidebar also may be hidden to the side. When the sidebar is displayed, it would cover part of the homepage. The sidebar contains contents like pre-added functional module.

The functional module indicates an application with specific functionality, such as mini programs and APP etc. In the embodiments of the present disclosure, the functional module is any module pre-added to the sidebar, wherein the functional module may generate a notification message for notifying messages related to the functional module.

Moreover, the position for displaying the notification message on the media content presentation page is pre-configured. The display position of the notification message may be adjusted by users by preferences and is not restricted here.

In the embodiments of the present disclosure, when a notification message from the functional module in the sidebar of the media content presentation page is received, a sidebar control corresponding to the sidebar is displayed on the media content presentation page, and the notification message is displayed on the sidebar control.

Specifically, an entry identifier corresponding to the sidebar and the message content of the notification message are displayed on the sidebar control.

Wherein the entry identifier is used for reminding the user that the display of the sidebar may be triggered by clicking the sidebar control to further enter the sidebar.

As shown in the above Fig. 2, the entry identifier 201 indicates that the user triggers the display of the sidebar by clicking the sidebar control to further enter the sidebar.

In the embodiments of the present disclosure, in the browsing of the media contents on the media content presentation page, the functional module in the sidebar of the media content presentation page may generate a notification message. In order to promptly notify the user of the notification message, the notification message from the functional module in the sidebar of the media content presentation page, once received, may be displayed at the preset position on the media content presentation page.

Specifically, when the notification message from the functional module in the sidebar of the media content presentation page is received, a sidebar control corresponding to the sidebar is displayed on the media content presentation page, wherein the sidebar control displays the notification message and the entry identifier. When the sidebar control displays the notification message, the tab label originally displayed on the media content presentation page may be hidden to reduce the interference over the display of the notification message.

In practical use, the notification message is displayed to remind the user to view the message and further obtain the related information of the corresponding functional module. If the notification message is displayed for a long time, it would impact the browsing of the media contents by users and keep the users from having an immersive experience. To solve this problem, in the embodiments of the present disclosure, the display duration of the notification message is timed, and after the timed duration reaches a preset duration, the sidebar control disappears and the notification message is hidden. Moreover, the tab label may be re-displayed on the media content presentation page. Specifically, the timing starts when it is detected that the notification message is displayed on the media content presentation page, and after the timed duration reaches a preset duration, the sidebar control and the notification message are controlled to disappear from the media content presentation page, i.e., the notification message is hidden and the tab label is re-displayed.

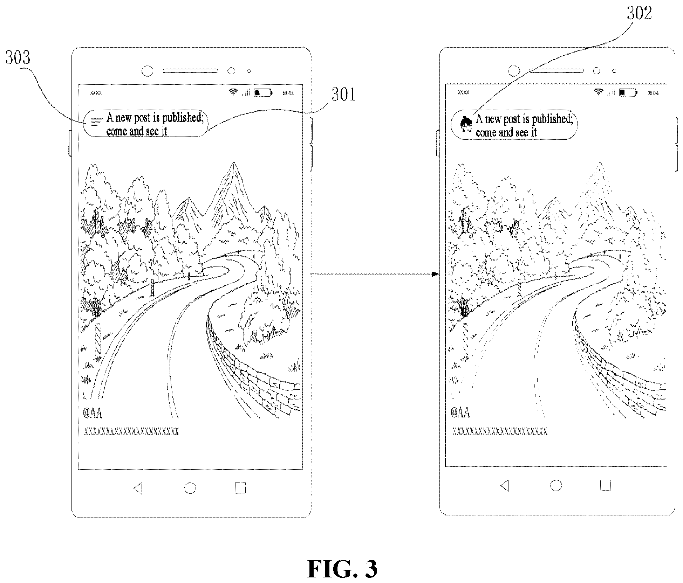

In an alternative implementation, on one hand, when the notification message from the functional module in the sidebar of the media content presentation page is received, the notification message and the entry identifier are displayed on the sidebar control on the media content presentation page and the tab label is hidden. On the presentation page, there are displayed the sidebar control and the notification message and the entry identifier thereon as illustrated by 301 in the left page of Fig. 3. On the other hand, the timing starts when it is detected that the notification message is displayed on the media content presentation page; when the display duration of the notification message reaches the preset duration, e.g., 1s as configured, the sidebar control is controlled to disappear, the notification message is hidden and the tab label is re-displayed.

In practical use, different notification messages contain contents of various types, and different display modes may be configured for the notification messages including different content types respectively, so as to prompt the users in an efficient way.

In an alternative implementation, when the notification message from the functional module in the sidebar of the media content presentation page is received, the sidebar control corresponding to the sidebar is displayed on the media content presentation page, wherein the sidebar control first displays the notification message and the entry identifier. If it is determined that the notification message contains a user identifier, the entry identifier displayed on the sidebar control may be dynamically switched to a user icon corresponding to the user identifier, wherein the user icon is used to indicate that the notification message is from a corresponding user and the user icon may be a user profile, a user ID and the like.

As shown in Fig. 3, which illustrates a schematic diagram of another media content presentation page provided by the embodiments of the present disclosure, it is assumed that when the notification message from the functional module in the sidebar of the media content presentation page is received, the sidebar control corresponding to the sidebar is displayed on the media content presentation page, and the notification message and the entry identifier of the sidebar are displayed on the sidebar control. For example, entry identifier 303 and descriptive information of the notification stating "a new post is published; come and see it" are displayed on the sidebar control 301. If it is determined that the notification message contains the user identifier, the entry identifier displayed on the sidebar control is switched to a user icon 302 corresponding to the user identifier for display. Accordingly, the user icon 302 and the descriptive information of the notification stating "a new post is published; come and see it" are displayed on the sidebar control.

The dynamic display mode of smoothly switching from the entry identifier and the descriptive information of the notification displayed on the sidebar control to the user icon and the descriptive information of the notification diversifies the display modes of the notification message and enhances the user experience.

On the basis of displaying the user icon and the descriptive information of the notification on the sidebar control, embodiments of the present disclosure also provide another display mode of the sidebar. Specifically:

In case of receiving the notification message from the functional module in the sidebar of the media content presentation page, if it is determined that the notification message contains a module identifier corresponding to the functional module, the module identifier corresponding to the functional module is displayed on the sidebar control, the module identifier indicating the functional module to which the notification message belongs.

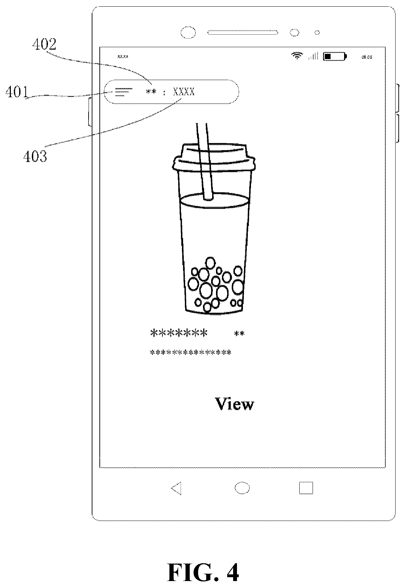

To better understand the above implementation, embodiments of the present disclosure provide a schematic diagram of the media content presentation page. According to Fig. 4, in case of receiving the notification message from the functional module in the sidebar of the media content presentation page, if it is determined that the notification message from the functional module contains a module icon of a modular program, the module identifier 402 corresponding to the functional module is displayed on the sidebar control. In such case, the sidebar control displays the entry identifier 401, the module identifier 402 and the descriptive information of the notification 403 etc.

Moreover, on the basis of the above embodiment, when the sidebar control displays at least one of the notification message, the module identifier, the entry identifier and the user icon, the display duration would be timed and the sidebar control and the display content on the sidebar control would be hidden once the display duration reaches the preset duration. Despite this, it is possible that the user might have a demand for closing the sidebar control within the display duration. For this, in the embodiments of the present disclosure, in addition to the notification message and the entry identifier, the sidebar control further may simultaneously display a close control for closing the current sidebar control. Specifically:

When a triggering operation on the close control is received, the sidebar control and the display content on the sidebar control are hidden; wherein the display content includes at least one of the notification message, the module identifier, the entry identifier and the user icon.

In an alternative implementation, when the notification message from the functional module in the sidebar of the media content presentation page is received, the notification message and the entry identifier are displayed on the sidebar control in the media content presentation page and the tab label is hidden; the timing starts once it is detected that the notification message is displayed on the media content presentation page; when the display duration does not reach the preset duration, the user triggers the sidebar control to enter the sidebar to view, or based on the reminder of the notification message on the sidebar control, the user is aware of the message, but does not intend to continue to display the notification message on the media content presentation page; in such case, the user may manually trigger the close control; accordingly, the sidebar control is closed and the display content on the sidebar control is hidden.

Since a large number of functional modules may be added into the sidebar, many notification messages may be generated. In order to reduce the impact on the browsing of the media contents by the user, a strategy for presenting the notification message may be preset.

In the embodiments of the present disclosure, it is assumed that a plurality of notification messages from the functional modules in the sidebar are received simultaneously. If it is determined that the notification messages do not belong to the same functional module, the current most recent notification message may be determined based on the generation time of the notification messages and presented on the media content presentation page. Further, the display sequence of the notification messages may also be determined in accordance with how frequently the functional module is used by the user, so as to display, by scrolling, a plurality of notification messages on the sidebar control of the media content presentation page.

In the embodiments of the present disclosure, if it is determined that a plurality of notification messages are the notification messages of the same type belonging to the same functional module, the plurality of notification messages may be combined for display. In this way, the display is simplified in case of too many notification messages.

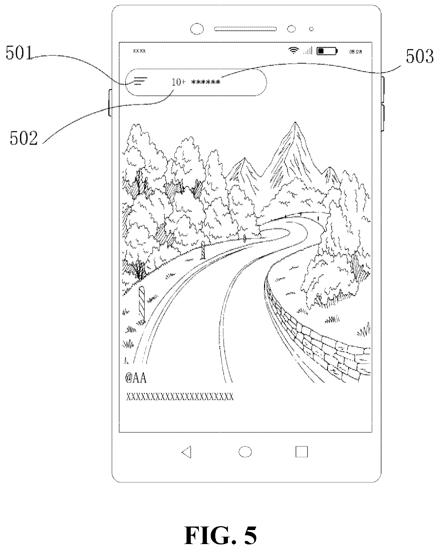

To facilitate the understanding of the above embodiments, Fig. 5 illustrates a schematic diagram of a further media content presentation page provided by the embodiments of the present disclosure. When a plurality of notification messages of the same type from the same functional module in the sidebar of the media content presentation page is received, the plurality of notification messages may be combined for display on the sidebar control of the media content presentation page, such as, an entry identifier 501 displayed on the sidebar control, notification messages 502 like "10+" and descriptive information of the notification 503, as shown in Fig. 5.

In an alternative implementation, the media contents presented on the media content presentation page may be bound to one or more functional modules. In the process of browsing the media contents, the user may be supported to add the functional modules corresponding to the media contents into the sidebar. Specifically, in the embodiments of the present disclosure, the media content presentation page may display a functional module addition control, so as to trigger the addition of the functional module bound to the media content currently displayed on the media content presentation page into the sidebar.

Specifically, when a triggering operation on the functional module addition control is received, the sidebar is displayed on the media content presentation page and a functional module corresponding to the media content displayed on the media content presentation page is added to the sidebar.

Wherein the functional module addition control is used to add the functional module bound to the currently displayed media content into the sidebar.

In an alternative implementation, it is only when the currently displayed media content is bound to the functional module, the functional module addition control is displayed on the media content presentation page and the user can trigger the addition of the functional module corresponding to the media content into the sidebar.

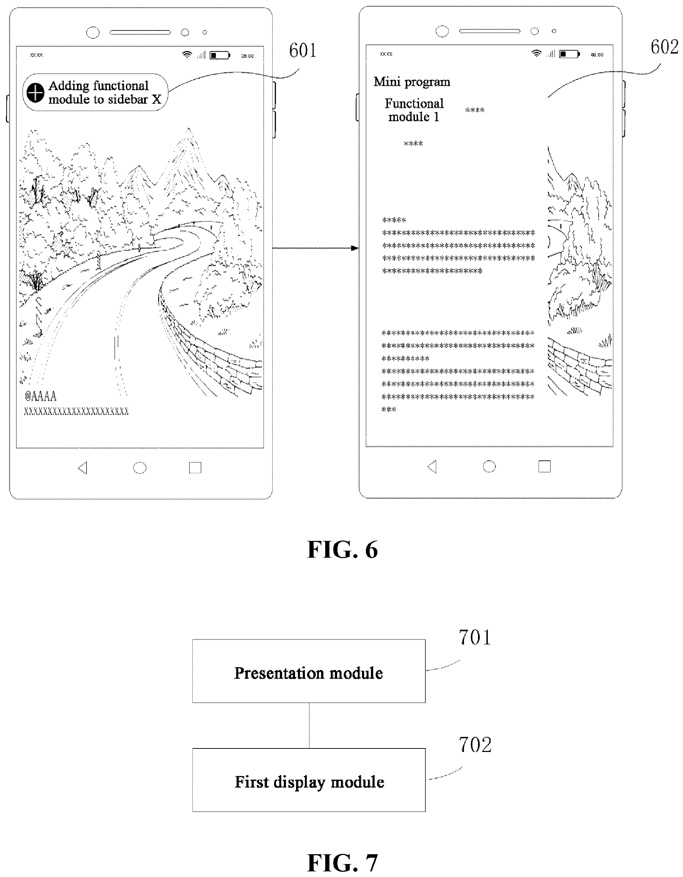

Fig. 6 illustrates a schematic diagram of another further media content presentation page provided by the embodiments of the present disclosure. The page displays the functional module addition control 601 and the display content may be "adding functional module to sidebar", to remind the user of the functionality of the control. Of course, the display content on the functional module addition control also may be in other forms for indicating the function supportive of adding the functional module bound to the currently displayed media content into the sidebar.

On the basis of the above embodiment, when a triggering operation on the functional module addition control 601 is received, the media content presentation page is switched from a left-side display mode to a right-side display mode (in which the sidebar indicated by 602 is displayed) as shown in Fig. 6 and add the functional module corresponding to the media content into the sidebar. Assuming that the functional module bound to the media content is "functional module 1", when a triggering operation on the functional module addition control 601 is received, the sidebar 602 is displayed on the media content presentation page and the functional module 1 corresponding to the media content is added to the sidebar 602.

In addition, the specific position of the functional module 1 on the sidebar is at the first row and the first column by default. However, the specific position also may be adjusted by user's preferences.

According to the embodiments of the present disclosure, while browsing the media contents, the user may be promptly reminded of the notification message from the functional module in the sidebar. This diversifies the display function of the notification message and enhances the user experience. Furthermore, it is further supported that the functional module bound to the currently displayed media content is added to the sidebar, for quick addition of the functional module and improvements in user operation experience.

On the basis of the above method embodiments, the present disclosure further provides an apparatus for message display. Fig. 7 illustrates a structural diagram of an apparatus for message display provided by the embodiments of the present disclosure. The apparatus comprises:
a presentation module 701 configured to present media content on a media content presentation page; and
a first display module 702 configured to display, in response to a notification message from the functional module in a sidebar of the media content presentation page, the notification message at a preset position on the media content presentation page.

In an alternative implementation, the first display module includes:
a first display sub-module configured to display a sidebar control corresponding to the sidebar on the media content presentation page; and
a second display sub-module configured to display the notification message on the sidebar control.

In an alternative implementation, the sidebar control further displays an entry identifier corresponding to the sidebar, and the apparatus further comprises:
a switching module configured to display a user icon corresponding to the notification message in place of the entry identifier on the sidebar control; wherein the user icon is used for indicating a target user corresponding to the notification message.

In an alternative implementation, the sidebar control further displays a module identifier corresponding to the functional module and the module identifier is used for indicating a functional module to which the notification message belongs.

In an alternative implementation, the apparatus further comprises:
a second display module configured to display, in response to a triggering operation on the sidebar control, the sidebar on the media content presentation page.

In an alternative implementation, the sidebar control further displays a close control and the apparatus further comprises:
a closing module configured to hide, in response to a triggering operation on the close control, the sidebar control and display content on the sidebar control; wherein the display content includes at least one of the notification message, the module identifier, the entry identifier and the user icon.

In an alternative implementation, the apparatus further comprises:
a timing module configured to time a display duration of the notification message and hide the notification message when a timed duration reaches a preset duration.

In an alternative implementation, the apparatus further comprises:
a third display module configured to display a functional module addition control on the media content presentation page; and
an adding module configured to display, in response to a triggering operation on the functional module addition control, the sidebar on the media content presentation page and add to the sidebar a functional module corresponding to the media content displayed on the media content presentation page.

Embodiments of the present disclosure provide a method for message display. In the method, first, media content is presented on a media content presentation page, and then the notification message is displayed at a preset position on the media content presentation page in response to a notification message from the functional module in a sidebar of the media content presentation page. According to the embodiments of the present disclosure, while browsing the media contents, the user may be promptly reminded of the notification message from the functional module in the sidebar. This diversifies the display function of the notification message and further enhances the user experience.

In addition to the above method and apparatus, the embodiments of the present disclosure further provide a non-transitory computer-readable storage medium stored thereon with instructions, the instructions, when running on a terminal device, causing the terminal device to implement the method for data access control according to the embodiments of the present disclosure.

Embodiments of the present disclosure further provide a computer program product comprising a computer program/instruction, the computer program/instruction, when executed by a processor, implementing the method for message display according to the embodiments of the present disclosure.

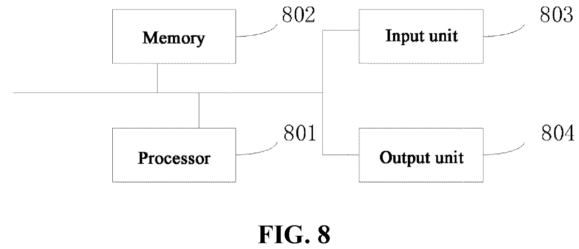

Moreover, embodiments of the present disclosure further provide a device for message display. According to Fig. 8, the device comprises:
a processor 801, a memory 802, an input unit 803 and an output unit 804. The device for data processing may include one or more processors 801 and Fig. 8 only shows one processor as the example. In some embodiments of the present disclosure, the processor 801, the memory 802, the input unit 803 and the output unit 804 may be connected by buses or other components. Fig. 8 illustrates the bus connection as an example.

The memory 802 may be used for storing software programs and modules and the processor 801 operates the software programs and modules stored in the memory 802 to execute the various functional applications and data processing of the device for data access control. The memory 802 mainly include program storage area and data storage area, wherein the program storage area may store operating systems and applications desired by at least one function and the like. Besides, the memory 802 may include a high random access memory and further a non-volatile memory, such as at least one magnetic disk storage device, flash device or other volatile solid-state storage devices. The input unit 803 may be provided for receiving input digital or character information and generating signal inputs associated with the user setting and the functional control of the device for message display.

Specifically, in the embodiments, the processor 801 would load into the memory 802 executable files corresponding to the progress of one or more applications in accordance with the following instructions. The processor 801 further operates the applications stored in the memory 802 to implement the above various functions of the device for message display.

It is to be explained that relational terms such as "first" and "second" in the text are disclosed only to distinguish one entity or operation from another entity or operation without requiring or suggesting any actual relations or sequences between these entities or operations. Besides, the terms "comprise", "contain" or any other variants are not featured with exclusiveness. Accordingly, the procedure, method, object or device including a series of factors may also include other factors not clearly listed in addition to those stated. Alternatively, inherent factors of the procedure, method, object or device are also included. The procedure, method or device including factors defined by the expression of "comprising one ..." may also contain other same factors if no more restrictions are provided.

The above is just the specific implementations of the present disclosure, which are provided for those skilled in the art to understand or implement the present disclosure. Many modifications to the embodiments are obvious for those skilled in the art. General principles defined in the text may be implemented in other embodiments without deviating from the spirit or scope of the present disclosure. Therefore, the present disclosure will not be restricted to the embodiments disclosed herein and instead has a broadest scope consistent with the principles and novel features disclosed here.

## Claims

1. A method for message display, comprising:
presenting media content on a media content presentation page; and
displaying, in response to a notification message from a functional module in a sidebar of the media content presentation page, the notification message at a preset position on the media content presentation page.

2. The method of claim 1, wherein displaying, in response to the notification message from the functional module in the sidebar of the media content presentation page, the notification message at the preset position on the media content presentation page comprises:
displaying, in response to the notification message from the functional module in the sidebar of the media content presentation page, a sidebar control corresponding to the sidebar on the media content presentation page; and
displaying the notification message on the sidebar control.

3. The method of claim 2, wherein the sidebar control further displays an entry identifier corresponding to the sidebar, and the method, after displaying the notification message on the sidebar control, further comprises:
displaying a user icon corresponding to the notification message in place of the entry identifier on the sidebar control; wherein the user icon is used for indicating a target user corresponding to the notification message.

4. The method of claim 2, wherein the sidebar control further displays a module identifier corresponding to the functional module, and the module identifier is used for indicating the functional module to which the notification message belongs.

5. The method of any of claims 2-4, further comprising:
displaying, in response to a triggering operation on the sidebar control, the sidebar on the media content presentation page.

6. The method of any of claims 2-4, wherein the sidebar control further displays a close control, and the method further comprises:
hiding, in response to a triggering operation on the close control, the sidebar control and display content on the sidebar control; wherein the display content comprises at least one of the notification message, a module identifier, an entry identifier, or a user icon.

7. The method of claim 1, wherein after displaying, in response to the notification message from the functional module in the sidebar of the media content presentation page, the notification message at the preset position on the media content presentation page, the method further comprises:
timing a display duration of the notification message; and hiding, in response to a timed duration reaching a preset duration, the notification message.

8. The method of claim 1, further comprising:
displaying a functional module addition control on the media content presentation page; and
in response to a triggering operation on the functional module addition control, displaying the sidebar on the media content presentation page, and adding to the sidebar a functional module corresponding to the media content displayed on the media content presentation page.

9. An apparatus for message display, comprising:
a presentation module configured to present media content on a media content presentation page; and
a first display module configured to display, in response to a notification message from a functional module in a sidebar of the media content presentation page, the notification message at a preset position on the media content presentation page.

10. A computer-readable storage medium having computer-executable instructions stored thereon, wherein the instructions, when running on a terminal device, cause the terminal device to perform the method according to any of claims 1-8.

11. A device for message display, comprising: a memory, a processor and computer programs stored in the memory and running on the processor, wherein the processor, when executing the computer programs, implements the method according to any of claims 1-8.
